# EUROPÄISCHE PATENTSCHRIFT

(11) **EP 4 237 724 B1**
(45) Veröffentlichungstag und Bekanntmachung des Hinweises auf die Patenterteilung: **16.09.2026**
(21) Anmeldenummer: 21801464.5
(22) Anmeldetag: 26.10.2021
(51) Int. Cl.: F16L 55/11, F16L 55/115, F16K 35/00, F16K 31/12

(54) **SICHERUNGSVORRICHTUNG**
SAFETY DEVICE
DISPOSITIF DE SÉCURITÉ

(30) Priorität: 27.10.2020 DE 102020006587
(43) Veröffentlichungstag der Anmeldung: 06.09.2023
(73) Patentinhaber: GEA Tuchenhagen GmbH, 21514 Büchen (DE)
(72) Erfinder: SCHOLZ, Gundar, 24217 Schönberg (DE)
(74) Vertreter: Hauck Patent- und Rechtsanwälte PartmbB
(86) Internationale Anmeldenummer: PCT/EP2021/079609
(87) Internationale Veröffentlichungsnummer: WO 2022/090189

(56) Entgegenhaltungen:
- EP-A1- 0 477 704
- DE-U1- 202008 001 778
- US-A- 5 201 201
- US-A1- 2012 000 259
- US-A1- 2013 180 610

## Beschreibung

Die Erfindung betrifft eine Sicherungsvorrichtung, eine Anordnung mit einem Antrieb und einem Steuerkopf und ein Verfahren.

Ventile, die mit einer Sicherungsvorrichtung zusammenwirken, werden in Anlagen zur Herstellung von Lebensmitteln, Getränken, Medikamenten und feinchemischen Produkten sowie in der Biotechnologie eingesetzt. In diesen Anwendungen haben sich pneumatische Antriebe durchgesetzt, um den Stellzustand des Ventils zu verändern. Oft erfolgt die Ansteuerung der Veränderung des Stellzustandes von einer zentralen Anlagensteuerung aus.

Während der Wartung solcher Anlagen ist es wichtig, wenigstens Teile von ihr in einen definierten Zustand zu bringen und sicher in diesem zu halten. Beispielsweise kann es notwendig sein, ein Rohrstück mit einem Gerät auszutauschen und dieses Rohrstück aus der Anlage zu entfernen. Damit das Rohrstück entfernt werden kann, wird davor und dahinter ein Ventil abgesperrt. Solange das Rohrstück entfernt ist, ist Sorge dafür zu tragen, dass die Ventile abgesperrt bleiben, da sonst Kontamination der Anlage und/oder Verlust von Produkt droht.

Dieses Feststellen und Sichern des Ventils wird "lock-out/tag-out" (LoTo) genannt, die Anlage gelangt in einen LoTo-Zustand.

Im Stand der Technik sind unterschiedliche Vorgehensweisen und Vorrichtungen bekannt.

Die WO 2013/109184 A1 schlägt vor, den Kolben eines pneumatischen Antriebes mechanisch zu verriegeln und dadurch unbeabsichtigtes Schalten zu unterbinden.

Gemäß der DE 102017130208 A1 ist ein Sperrelement vorgesehen, welches mit einer Sperrkontur an einer Ventilspindel in Eingriff gebracht werden kann, um damit die Bewegung der Ventilspindel zu unterbinden.

Die US 2020/0132215 A1 schlägt ebenfalls vor, ein Sperrelement mit einer Ventilstange in Eingriff zu bringen. Damit soll eine Drehung der Ventilstange zur Betätigung des Absperrelements des Ventils unterbunden werden.

Im Stand der Technik werden oft bauliche Veränderungen am Ventil selbst oder an der Betätigungsvorrichtung vorgenommen. Eine Sicherungsvorrichtung wird als mechanisches Bauelement in das Ventil oder den zugeordneten Antrieb integriert. Aus DE 20 2008 001 778 U1 ist eine Kupplung zum Anschluss von Rohrenden bekannt, umfassend einen Kupplungskörper, in den auf gegenüberliegenden Seiten die anzuschließenden Rohrenden einsteckbar sind. Auf den Kupplungskörper können zwei Sicherungshülsen zwischen einer Freigabestellung und einer Sicherungsstellung verschiebbar und an dem Kupplungskörper in ihrer Sicherungsstellung fixierbar sein. In der Sicherungsstellung übergreifen die Sicherungshülsen jeweils in eine im jeweiligen Rohrende ausgebildete Nut eingreifende Vorsprünge als Verriegelungselement des Kupplungskörpers.

EP 0 477 704 A1 beschreibt eine Rohrpresskupplung, bei der wenigstens ein Rohrende mittels eines axial aufgeschobenen Überwurfpresslings und einer in das Rohrende eingesetzten, am Außenumfang profilierten Stützhülse, die einen äußeren radialen Anschlagflansch für das Rohrende aufweist, verbunden ist. Die Außenseite des Rohrendes ist von einem sich in Längsrichtung über das Stirnende des Rohrendes erstreckenden Kupplungsteil umgeben.

Weitere verriegelbare Rohrkopplungen sind beschrieben in US 2013/0180610 A1, US 2012/0000259 A1 und US 5201201A.

Es war nun Aufgabe, eine verbesserte Sicherungsvorrichtung zu schaffen.

Diese Aufgabe wird gelöst mit einer Sicherungsvorrichtung mit den Merkmalen des Patentanspruchs, einer Anordnung nach Anspruch 7 und ein Verfahren nach Anspruch 9.

Auf einem Grundkörper sind zwei Hülsen vorgesehen, die auf dem Grundkörper verschiebbar sind. In einer Stellung, in der wenigstens eine von ihnen die erste oder die zweite Kupplung abdecken, sind sie arretierbar. Durch die Arretierung sind die Kupplungsverbindungen in der Stellung nicht mehr lösbar. Es kann ausreichen, nur die Druckluftleitung festzulegen und so eine Druckluftversorgung zu unterbrechen. Selbst wenn der Anschluss am Steuerkopf dann noch bedienbar bleibt, ist eine versehentliche Versorgung mit Druckluft hinreichend erschwert. Dies ist hilfreich bei einer winkligen Anordnung, in der die Längsachsen der Kupplungsabschnitte in einem Winkel zueinanderstehen. Sicherer ist es, den Anschluss am Steuerkopf zu blockieren, eine Festlegung der Druckluftleitung ist dann nicht zwingend. Die sicherste Ausführung ist jedoch, wenn beide Kupplungsabschnitte festgelegt und nicht mehr bedienbar sind.

Die Sicherungsvorrichtung nach Anspruch 1 ist nachrüstbar. Bauliche Veränderungen am Ventil, die auf eine große Stückzahl gesehen Kosten erzeugen, sind nicht notwendig. Sollte der Bedarf einer Sicherung eines Ventils erst nach Installation des Ventils in der Anlage entstehen, kann die Sicherungsvorrichtung einfach an den Antrieb oder den diesen steuernden Steuerkopf nachgerüstet werden. Dies ist insgesamt kostengünstig. Ein unbeabsichtigtes Schalten wird zuverlässig unterbunden, da Antrieb oder Steuerkopf von der Druckmittelversorgung abgeschnitten sind und somit gar keine Schaltung mehr durchführen können. Ein Verschleiß, der beispielsweise an einem im Ventil integrierten Sperrelement auftreten kann, kann nicht zu einem Versagen der LoTo-Funktion führen.

Die Sicherungsvorrichtung wird von den Abmessungen kompakter und sicherer gegen Lösen des Sicherungszustandes, wenn die erste Hülse wenigstens abschnittsweise in der zweiten Hülse aufnehmbar ist.

Gemäß einer anderen Weiterbildung ist vorgesehen, dass der erste Kupplungsabschnitt zylindrisch geformt ist und eine an einer Umfangsrichtung ausgerichteten Nut aufweist. Dies ist eine kostengünstige Ausführung, in der der Kupplungsabschnitt mechanisch die Rolle einer Druckmittelleitung übernimmt und mit der Nut gut sicherbar ist.

Die Druckmittelleitung muss im LoTo-Zustand nicht zwingend mit irgendetwas verbunden sein, sondern kann im Grunde frei liegen. Sicherer ist es jedoch, sie mit der Sicherungsvorrichtung zu verbinden, weshalb es vorteilhaft ist, wenn der zweite Kupplungsabschnitt eine Aufnahme umfasst, in welcher eine Druckmittelleitung aufnehmbar ist. Dies reduziert Fehlbedienungen.

Gemäß einer anderen Weiterbildung ist vorgesehen, dass ein freies Ende der zweiten Hülse und ein freies Ende des zweiten Kupplungsabschnitts zur Deckung bringbar sind. Im LoTo-Zustand bei montierter Sicherungsvorrichtung ist das Ende der Druckmittelleitung sowie etwaige dort an Leitung und/oder Sicherungsvorrichtung vorgesehenen Bedienelemente, beispielsweise einer Klemmvorrichtung, durch diese Bauweise unzugänglich. Die Sicherheit des LoTo-Zustandes ist somit erhöht.

Die Arretierung der Hülsen kann einzeln erfolgen. Erfindungsgemäß ist es, beide Hülsen mittels eines gemeinsamen Sicherungselements festzulegen. Erfindungsgemäß, sieht eine vorteilhaft sichere und kostengünstige Lösung vor, Durchgangslöcher in wenigstens dem Grundkörper und einer der Hülsen in Deckung zu bringen und ein Sicherungselement durch diese Durchgangslöcher zu stecken, beispielsweise ein Bügelschloss.

Die Sicherheit des Betriebszustandes "Lock-Out Tag-Out" der Sicherungsvorrichtung wird weiter erhöht, indem die erste Hülse einen Anschlag aufweist, welcher eine Verschiebung der ersten Hülse blockiert, wenn ein Bügelschloss in den Durchgangslöchern aufgenommen ist. Das Lösen der Sicherungsvorrichtung vom Druckmittelanschluss wird noch zuverlässiger verhindert.

Die Vorteile der vorgenannten Sicherungsvorrichtung und ihrer Ausgestaltungsformen kommt besonders bei einer Anordnung mit einem Antrieb und einem Steuerkopf zur Geltung, wenn dort die Sicherungsvorrichtung zwischen einer Druckmittelleitung und einem Druckmittelanschluss angeordnet ist. Steuerköpfe koppeln Geräte einer Prozessanlage, beispielsweise Ventile, an eine Anlagensteuerung. Die Gefahr, dass Befehle der Anlagensteuerung vom Steuerkopf zu einer unpassenden Zeit umgesetzt werden wird durch die Sicherungsvorrichtung verhindert, ohne dass an der Anlagensteuerung eine Änderung erfolgen muss.

Dieser Vorteile kommt besonders zur Geltung bei einer Anordnung mit Antrieb und Steuerkopf, wenn der Druckmittelanschluss am Steuerkopf angeordnet ist.

Zur Lösung der Aufgabe ist ein Verfahren zum Sichern einer Anordnung mit einem druckmittelbetriebenen Antrieb und einer Sicherungsvorrichtung nach den beschriebenen Ausführungen vorgesehen, bei welchem der erste Kupplungsabschnitt mit einem Druckmittelanschluss und der zweite Kupplungsabschnitt mit einer Druckmittelleitung verbunden wird, der erste Kupplungsabschnitt mit der ersten Hülse und der zweite Kupplungsabschnitt mit der zweiten Hülse verdeckt werden und abschließend erste und zweite Hülse mit einem Sicherungselement festgelegt werden. Auf diese Weise wird der Fluss von Pneumatikluft aus der Druckmittelleitung in den Druckmittelanschluss sicher unterbunden und ein Lösen ohne Entfernen des Sicherungselements verhindert, da beide Kupplungsabschnitte verdeckt und damit nicht mehr bedienbar sind.

Anhand eines Ausführungsbeispiels sollen die Erfindung erläutert und die Darstellung ihrer Vorteile vertieft werden. Es zeigen:
- **Fig. 1:**: Ansicht eines Steuerkopfes mit angeflanschtem Antrieb für ein Ventil;
- **Fig. 2:**: Längsschnitt durch eine Sicherungsvorrichtung in einer ersten Stellung ihrer Hülsen;
- **Fig. 3:**: Längsschnitt durch die Sicherungsvorrichtung in einer zweiten Stellung ihrer Hülsen;
- **Fig. 4:**: Längsschnitt durch die Sicherungsvorrichtung in einer dritten Stellung ihrer Hülsen.

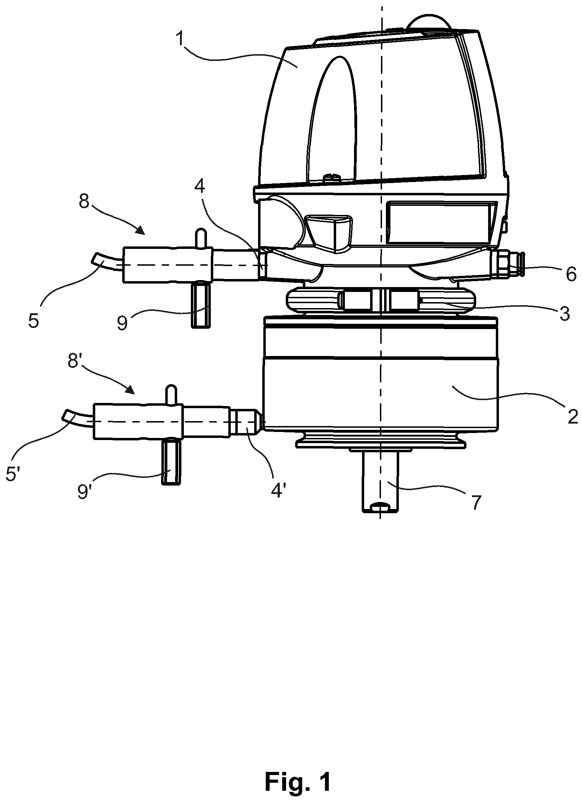

In Fig. 1 ist ein Steuerkopf 1 in einer Außenansicht zu sehen, der an einen pneumatisch ausgeführten Antrieb 2 angeflanscht ist. Die Flanschverbindung 3 ist lösbar ausgeführt. Der Steuerkopf 1 ist mit einer Anlagensteuerung verbindbar, um von dort beispielsweise Stellungsbefehle zu übernehmen und Stellungspositionen an diese zurück zu melden. Es ist ein Druckmittelanschluss 4 vorgesehen, welcher mit einer Druckmittelleitung 5 einer Anlage verbindbar ist.

Im Steuerkopf 1 ist wenigstens ein Pilotventil vorgesehen, mit welchem das Druckmittel, beispielsweise Pneumatikluft, geschaltet wird. Dieser geschaltete Druckmittelstrom wird zur Druckbeaufschlagung eines Kolbens benutzt. Die Druckmittelführung kann über eine entsprechende Gestaltung der Flanschverbindung mit einem Druckmittelkanal erfolgen. Alternativ oder zusätzlich kann ein Anschluss 6 vorgesehen sein, um eine weitere Druckmittelleitung anzuschließen, mit der Steuerkopf 1 und ein weiterer Kolben verbunden werden. Mehrere Kolben sind beispielsweise notwendig, wenn zu der Auf-Zu-Funktion des Ventils noch weitere Stellungen realisiert werden sollen. Diese können beispielsweise zur Schaffung eines Teilhubes notwendig sein, um das Schließelement des Ventils in eine Reinigungsstellung zu bringen. In dieser ist das Schließelement in der Regel nur leicht von seinem Sitz spaltbildend abgehoben, um Dichtung und Sitz einem Reinigungsfluid zugänglich zu machen. Sollten im Ventil mehrere Schließelemente vorgesehen sein, können mehrere Pilotventile und Anschlüsse 6 notwendig sein.

Der Antrieb 2 besitzt eine Antriebsstange 7, die mit einer Ventilstange des Ventils verbindbar ist und die druckmittelinduzierte Bewegung eines Kolbens des Antriebs 2 auf das Schließelement des Ventils überträgt. Auch der Antrieb 2 kann einen Druckmittelanschluss 4' aufweisen.

Der Steuerkopf 2 wird in den sicheren "Lockout-Tagout"-Zustand, in dem er das Ventil nicht mehr schaltet, gebracht, indem zwischen Druckmittelanschluss 4 und Druckmittelleitung 5 eine Sicherungsvorrichtung 8 eingesetzt wird. Dazu wird zunächst die Druckmittelleitung 5 vom Druckmittelanschluss 4 getrennt. Anschließend werden die Druckmittelleitung 5 mit der Sicherungsvorrichtung 8 und die Sicherungsvorrichtung 8 mit dem Druckmittelanschluss 4 verbunden.

Soweit am Antrieb ein weiterer Druckmittelanschluss 4' vorgesehen ist, kann dieser ebenfalls mit einer Sicherungsvorrichtung 8' gegen unerwünschte Ansteuerung gesichert werden. Die Sicherungsvorrichtung 8' ist dann zwischen einer weiteren Druckmittelleitung 5' und dem weiteren Druckmittelanschluss 4' angeordnet und ebenfalls mit einem Bügelschloss 9' gesichert.

Die Sicherungsvorrichtung 8 wird mit einem Bügelschloss 9 oder einem vergleichbaren Element gesichert: Diese Sicherung bewirkt, so dass die Sicherungsvorrichtung 8 nicht vom Druckmittelanschluss 4 und von der Druckmittelleitung 5 getrennt werden kann.

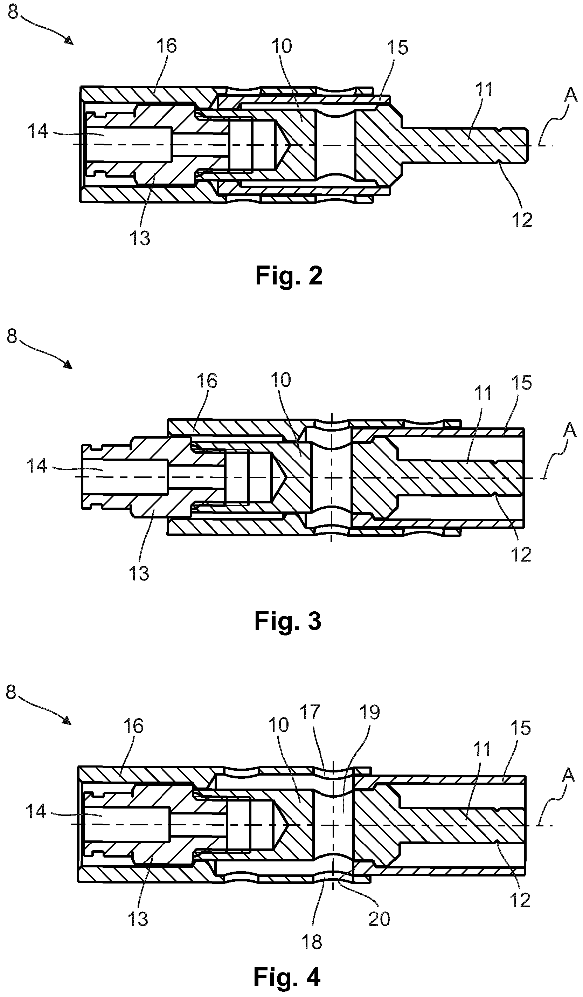

Aufbau und Funktion der Sicherungsvorrichtung 8 werden anhand der Fig. 2 bis Fig. 4 genauer erläutert, die die Sicherungsvorrichtung 8 in einem Längsschnitt zeigen. In den Fig. sind verschiedene Phasen der Montage der Sicherungsvorrichtung 8 an einem Steuerkopf 1 und/oder einem Antrieb 2 gezeigt.

In Fig. 2 erstreckt sich ein Grundkörper 10 entlang einer Längsachse A.

An einem ersten Ende ist ein erster Kupplungsabschnitt 11 vorgesehen. Dieser ist zum Zusammenwirken mit dem Anschluss 4 ausgeführt. Im gezeigten Beispiel ist er zylindrisch geformt und besitzt einen Außendurchmesser, der dem der Druckmittelleitung 5 entspricht. Typisch ist der Anschluss 4 als Steckanschluss für die Druckmittelleitung 5 ausgeführt. Solche Steckaufnahmen sind im Stand der Technik bekannt. Die DE 2401505 A1, DE 25 28 757 B2 und DE 197 25 999 C1 zeigen typische Steckaufnahmen, die auch auf eingangs beschriebenen Anwendungsgebieten in identischer oder ähnlicher Form Anwendung finden. Die Druckmittelleitung 5 wird in einem dermaßen gestalten Anschluss 4 aufgenommen und geklemmt, wobei die Klemmung lösbar ausgeführt ist. Der erste Kupplungsabschnitt 11 kann eine Nut 12 aufweisen, die mit der Klemmung zusammenwirkt und das Herausgleiten des Kupplungsabschnittes 11 aus dem Anschluss 4 verhindert.

An einem dem ersten Kupplungsabschnitt 11 gegenüberliegenden Ende des Grundkörpers 10 ist ein zweiter Kupplungsabschnitt 13 ausgeformt oder mit Grundkörper 10 verbunden. Der zweite Kupplungsabschnitt 13 besitzt eine Aufnahme 14, in welcher die Druckmittelleitung 5 aufnehmbar ist. Die Darstellung in den Fig. 2 bis 4 zeigt eine sehr einfach gehaltene Ausführung. Aufnahme 14 und zweiter Kupplungsabschnitt 13 besitzen jedoch bevorzugt eine Klemmung gemäß Stand der Technik, wie beispielsweise in DE 2401505 A1, DE 25 28 757 B2 und DE 197 25 999 C1, damit die Druckmittelleitung 5 sicher gehalten ist.

Oft besitzen Anschluss 4 und zweiter Kupplungsabschnitt 13 je ein Bedienelement, mit dem die Klemmung lösbar ist. Das kann beispielsweise ein Druckelement oder ein Überwurfmutter sein.

Auf dem Grundkörper 10 ist eine erste Hülse 15 angeordnet. Die erste Hülse 15 ist entlang der Längsachse A gegenüber dem Grundkörper 10 verschiebbar ausgeführt. Der Grundkörper 10 trägt eine zweite Hülse 16, die ebenfalls gegenüber ihm entlang der Längsachse A verschiebbar ausgeführt ist. Die erste Hülse 15 ist eingerichtet, den ersten Kupplungsabschnitt 11 zu umgeben. Die zweite Hülse 16 ist eingerichtet, den zweiten Kupplungsabschnitt 13 zu umgeben. Zudem ist die erste Hülse 15 wenigstens abschnittsweise in der zweiten Hülse 16 aufnehmbar.

In Fig. 2 ist die erste Hülse 15 derart positioniert, dass der erste Kupplungsabschnitt 11 freiliegt. Er ist nun leicht im Anschluss 4 montierbar. Die zweite Hülse 16 hingegen deckt den zweiten Kupplungsabschnitt 13 so ab, dass er nicht bedienbar ist.

In Fig. 3 ist eine Stellung der Hülsen 15 und 16 gezeigt, wie sie nach der Montage der Sicherungsvorrichtung 8 durch Einstecken des ersten Kupplungsabschnitts 11 am Anschluss 4 benutzt wird. Die erste Hülse 15 ist nun so verschoben, dass der erste Kupplungsabschnitt 11 abgedeckt ist. Die freien Enden des Kupplungsabschnitts 11 und der ersten Hülse 15 befinden sich nun nahe beieinander. Dadurch ist auch der Anschluss 4 in der ersten Hülse 15 aufgenommen, und etwaige Bedienelemente sind nicht mehr zugänglich.

Die zweite Hülse 16 ist in Richtung der ersten Hülse 15 geschoben und deckt diese teilweise ab. Insbesondere gibt sie den zweiten Kupplungsabschnitt 13 frei. Hierdurch ist die Druckmittelleitung 5 in der Aufnahme 14 montierbar.

In Fig. 4 ist die montierte Stellung der Sicherungsvorrichtung 8 gezeigt. Die erste Hülse 15 befindet sich weiterhin in der Position gemäß Fig. 3, in der sie den ersten Kupplungsabschnitt 11 abdeckt. Zusätzlich ist gemäß Fig. 4 nun die zweite Hülse 16 so verschoben, dass sie den zweiten Kupplungsabschnitt 13 abdeckt. Insbesondere verdeckt sie etwaige Bedienelemente, mit dem die Druckleitung 5 aus der Aufnahme 14 lösbar ist. Dies wird erreicht, indem freie Enden der zweiten Hülse 16 und des zweiten Kupplungsabschnitts 13 zur Deckung kommen.

Die zweite Hülse 16 besitzt zwei sich auf einer Mantelfläche der zweiten Hülse 16 gegenüberliegende Durchgangslöcher 17 und 18. In der Stellung gemäß Fig. 4 fluchten diese Durchgangslöcher 17 und 18 mit einem Durchgangsloch 19 im Grundkörper 10. Ein Sicherungselement ist in den Durchgangslöchern 17, 18 und 19 aufnehmbar. Dies kann beispielsweise ein Querbolzen sein, der die Durchgangslöcher 17, 18 und 19 im Grundkörper 10 und den Hülsen 15 und 16 durchsetzt und zusätzlich gegen Entnahme aus den Durchgangslöchern 17, 18 und 19 gesichert ist. Vorteilhaft kostengünstig, in der Bedienung einfach und zuverlässig, ist das Sicherungselement als Bügelschloss 9 ausgebildet. Damit werden Grundkörper und zweite Hülse 16 zueinander in der Position festgelegt. Die erste Hülse 15 weist einen Anschlag 20 auf, der mit dem Bügelschloss 9 in Kontakt tritt und eine Verschiebung der ersten Hülse 15 blockiert.

Zur Montage der Sicherungsvorrichtung an einem Steuerkopf oder einem pneumatisch betriebenen Stellelement wird dieses zunächst in die gewünschte Schaltstellung gebracht. Beispielsweise wird die Druckluft abgesteuert, so dass der Ventilantrieb drucklos in eine federschließende "Ruhelage" fährt. Das kann zur Absperrung einer Rohrleitung beispielsweise "Normal geschlossen"-Ventil sein, welches ohne Druckluft schließt und mit Druckluft öffnet. Anschließend wird, soweit notwendig, der Druck auf der Druckmittelleitung verringert und diese von Steuerkopf oder Stellelement getrennt. Danach wird die Sicherungsvorrichtung wahlweise in die Stellung nach Fig. 2 oder Fig. 3 gebracht. In der Stellung der Hülsen 15 und 16 nach Fig. 2 wird die Sicherungsvorrichtung mit Steuerkopf oder Stellelement verbunden. Dann wird die ersten Hülse 15 verschoben, um den ersten Kupplungsabschnitt 11 abzudecken. Als nächstes wird die zweite Hülse 16 verschoben, um den zweiten Kupplungsabschnitt 13 zugänglich zu machen. Das Verschieben der Hülsen 15 und 16 kann auch gleichzeitig erfolgen. Wenn der zweite Kupplungsabschnitt wie in Fig. 3 gezeigt freigelegt ist, wird die Druckmittelleitung 5 mit dem zweiten Kupplungsabschnitt 13 verbunden. Sobald dies erfolgt ist, wird die zweite Hülse 16 verschoben, um den zweiten Kupplungsabschnitt 13 zu verdecken. Die erste Hülse 15 bleibt währenddessen in der abdeckenden Stellung. Es ergibt sich so die Stellung nach Fig. 4. Abschließend wird ein Sicherungselement, hier ein Bügel des Bügelschlosses 9 durch die Durchgangslöcher 17, 18 und 19 gesteckt. Mit Abschließen des Bügelschlosses 9 ist die Sicherungsvorrichtung im Zustand nach Fig. 4 festgelegt und Steuerkopf oder Stellelement gegen eine ungewollte Änderung des Schaltzustandes zuverlässig gesichert.

### Bezugszeichenliste

- 1: Steuerkopf
- 2: Antrieb
- 3: Flanschverbindung
- 4, 4': Druckmittelanschluss
- 5, 5': Druckmittelleitung
- 6: Anschluss
- 7: Antriebsstange
- 8, 8': Sicherungsvorrichtung
- 9, 9': Bügelschloss
- 10: Grundkörper
- 11: erster Kupplungsabschnitt
- 12: Nut
- 13: zweiter Kupplungsabschnitt
- 14: Aufnahme
- 15: erste Hülse
- 16: zweite Hülse
- 17: Durchgangsloch
- 18: Durchgangsloch
- 19: Durchgangsloch
- 20: Anschlag
- A: Längsachse

## Patentansprüche

1. Sicherungsvorrichtung (8) mit einem sich entlang einer Längsachse (A) erstreckenden Grundkörper (10), einem ersten Kupplungsabschnitt (11), einem zweiten Kupplungsabschnitt (13), mit einer ersten Hülse (15) und einer zweiten Hülse (16), wobei erste und zweite Hülse (15, 16) entlang der Längsachse (A) verschiebbar auf dem Grundkörper (10) angeordnet sind und erste und zweite Hülse (15, 16) und Grundkörper (10) in eine Stellung bringbar sind, in welcher wenigstens eine von erster Hülse (15) und zweiter Hülse (16) den zugeordneten ersten Kupplungsabschnitt (11) und den zweiten Kupplungsabschnitt (13) abdeckt, und wenigstens die abdeckende Hülse (15, 16) in der Stellung arretierbar ist, wobei die erste Hülse (15) und die zweite Hülse (16) mittels eines gemeinsamen Sicherungselements festlegbar sind, **dadurch gekennzeichnet, dass** die zweite Hülse (16) zwei sich auf einer Mantelfläche der zweiten Hülse (16) gegenüberliegende Durchgangslöcher (17) und (18) besitzt, welche in der Stellung der ersten und zweiten Hülse (15, 16) mit einem Durchgangsloch (19) im Grundkörper (10) fluchten.

2. Sicherungsvorrichtung nach Anspruch 1, **dadurch gekennzeichnet, dass** die erste Hülse (15) wenigstens abschnittsweise in der zweiten Hülse (16) aufnehmbar ist.

3. Sicherungsvorrichtung nach Anspruch 1 oder 2, **dadurch gekennzeichnet, dass** der erste Kupplungsabschnitt (11) zylindrisch geformt ist und eine an einer Umfangsrichtung ausgerichteten Nut (12) aufweist.

4. Sicherungsvorrichtung nach einem der vorhergehenden Ansprüche, **dadurch gekennzeichnet, dass** der zweite Kupplungsabschnitt (13) eine Aufnahme (14) umfasst, in welcher eine Druckmittelleitung (5) aufnehmbar ist.

5. Sicherungsvorrichtung nach einem der vorhergehenden Ansprüche, **dadurch gekennzeichnet, dass** ein freies Ende der zweiten Hülse (16) und ein freies Ende des zweiten Kupplungsabschnitts (13) zur Deckung bringbar sind.

6. Sicherungsvorrichtung nach Anspruch 1, **dadurch gekennzeichnet, dass** die erste Hülse (15) einen Anschlag (20) aufweist, welcher eine Verschiebung der ersten Hülse (15) blockiert, wenn ein Bügelschloss (9) in den Durchgangslöchern (17, 18, 19) aufgenommen ist.

7. Anordnung mit einem Antrieb (2) und einem Steuerkopf (1), **dadurch gekennzeichnet, dass** zwischen einer Druckmittelleitung und einem Druckmittelanschluss (4) eine Sicherungsvorrichtung (8) nach einem der vorhergehenden Ansprüche angeordnet ist.

8. Anordnung nach Anspruch 7, **dadurch gekennzeichnet, dass** der Druckmittelanschluss (4) am Steuerkopf (1) angeordnet ist.

9. Verfahren zum Sichern einer Anordnung mit einem druckmittelbetriebenen Antrieb (2) und einer Sicherungsvorrichtung (8) nach einem der Ansprüche 1 bis 6, **dadurch gekennzeichnet, dass** der erste Kupplungsabschnitt (11) mit einem Druckmittelanschluss (4) und der zweite Kupplungsabschnitt (13) mit einer Druckmittelleitung (5) verbunden wird, der erste Kupplungsabschnitt (11) mit der ersten Hülse (15) und der zweite Kupplungsabschnitt (13) mit der zweiten Hülse (16) verdeckt werden und abschließend erste und zweite Hülse (15, 16) mit einem Sicherungselement festgelegt werden.

## Claims

1. A safety device (8) comprising a main body (10) that extends along a longitudinal axis (A), a first coupling portion (11), a second coupling portion (13), comprising a first sleeve (15) and a second sleeve (16), wherein the first and second sleeves (15, 16) are arranged on the main body (10) so as to be shiftable along the longitudinal axis (A) and the first and second sleeves (15, 16) and main body (10) can be brought into a position in which at least one of the first sleeve (15) and second sleeve (16) covers the associated first coupling portion (11) and the second coupling portion (13), and at least the covering sleeve (15, 16) can be locked in the position, wherein the first sleeve (15) and the second sleeve (16) can be immobilized by means of a common safety element, **characterized in that** the second sleeve (16) has two through-holes (17) and (18) that oppose one another on a lateral surface of the second sleeve (16) and that are flush with a through-hole (19) in the main body (10) in the position of the first and second sleeves (15, 16).

2. The safety device according to claim 1, **characterized in that** the first sleeve (15) can be received at least in portions in the second sleeve (16).

3. The safety device according to claim 1 or 2, **characterized in that** the first coupling portion (11) is cylindrically shaped and has a groove (12) oriented in a circumferential direction.

4. The safety device according to one of the preceding claims, **characterized in that** the second coupling portion (13) comprises a receiving portion (14) in which a pressure medium line (5) can be received.

5. The safety device according to one of the preceding claims, **characterized in that** a free end of the second sleeve (16) and a free end of the second coupling portion (13) can be brought into alignment.

6. The safety device according to claim 1, **characterized in that** the first sleeve (15) has a stop (20) which blocks a shifting of the first sleeve (15) when a U-lock (9) is received in the through-holes (17, 18, 19).

7. An assembly comprising a drive (2) and a control head (1), **characterized in that** a safety device (8) according to one of the preceding claims is arranged between a pressure medium line and a pressure medium connection (4).

8. The assembly according to claim 7, **characterized in that** the pressure medium connection (4) is arranged on the control head (1).

9. A method for securing an assembly comprising a pressure medium-operated drive (2) and a safety device (8) according to one of claims 1 to 6, **characterized in that** the first coupling portion (11) is connected to a pressure medium connection (4) and the second coupling portion (13) is connected to a pressure medium line (5), the first coupling portion (11) is concealed by means of the first sleeve (15) and the second coupling portion (13) is concealed by means of the second sleeve (16), and, finally, the first and second sleeves (15, 16) are immobilized by means of a safety element.

## Revendications

1. Dispositif de sécurité (8) doté d'un corps de base (10) s'étendant le long d'un axe longitudinal (A), d'une première section d'accouplement (11), d'une seconde section d'accouplement (13), d'un premier manchon (15) et d'un second manchon (16), dans lequel les premier et second manchons (15, 16) sont agencés coulissants le long de l'axe longitudinal (A) sur le corps de base (10) et les premier et second manchons (15, 16) et le corps de base (10) peuvent être amenés dans une position dans laquelle au moins l'un du premier manchon (15) et du second manchon (16) recouvre la première section d'accouplement (11) et la seconde section d'accouplement (13) associées, et au moins le manchon de recouvrement (15, 16) est verrouillable dans ladite position, le premier manchon (15) et le second manchon (16) pouvant être bloqués au moyen d'un élément de sécurité commun, **caractérisé en ce que** le second manchon (16) possède deux orifices traversants (17) et (18) opposés sur une surface latérale du second manchon (16), lesquels orifices sont alignés dans la position des premier et second manchons (15, 16) avec un orifice traversant (19) dans le corps de base (10).

2. Dispositif de sécurité selon la revendication 1, **caractérisé en ce que** le premier manchon (15) peut être logé au moins par sections dans le second manchon (16).

3. Dispositif de sécurité selon les revendications 1 ou 2, **caractérisé en ce que** la première section d'accouplement (11) est de forme cylindrique et présente une rainure (12) orientée suivant une direction circonférentielle.

4. Dispositif de sécurité selon l'une des revendications précédentes, **caractérisé en ce que** la seconde section d'accouplement (13) comprend un logement (14) pouvant accueillir une conduite de fluide sous pression (5).

5. Dispositif de sécurité selon l'une des revendications précédentes, **caractérisé en ce qu'**une extrémité libre du second manchon (16) et une extrémité libre de la seconde section d'accouplement (13) peuvent être amenées en coïncidence.

6. Dispositif de sécurité selon la revendication 1, **caractérisé en ce que** le premier manchon (15) présente une butée (20) qui bloque un déplacement du premier manchon (15), lorsqu'un cadenas à anse (9) est logé dans les orifices traversants (17, 18, 19).

7. Agencement comprenant un entraînement (2) et une tête de commande (1), **caractérisé en ce qu'**un dispositif de sécurité (8) selon l'une des revendications précédentes est agencé entre une conduite de fluide sous pression et un raccord de fluide sous pression (4).

8. Agencement selon la revendication 7, **caractérisé en ce que** le raccord de fluide sous pression (4) est agencé sur la tête de commande (1).

9. Procédé pour sécuriser un agencement comprenant un entraînement (2) actionné par fluide sous pression et un dispositif de sécurité (8) selon l'une des revendications 1 à 6, **caractérisé en ce que** la première section d'accouplement (11) est reliée à un raccord de fluide sous pression (4) et la seconde section d'accouplement (13) est reliée à une conduite de fluide sous pression (5), la première section d'accouplement (11) étant recouverte par le premier manchon (15) et la seconde section d'accouplement (13) étant recouverte par le second manchon (16) et enfin, les premier et second manchons (15, 16) étant bloqués avec un élément de sécurité.
